Europäisches Patentamt

European Patent Office

Office européen des brevets

(11) Veröffentlichungsnummer: **0 391 881**
**A2**

# EUROPÄISCHE PATENTANMELDUNG

(21) Anmeldenummer: 90890070.7

(22) Anmeldetag: 12.03.90

(51) Int. Cl.5: **B23B 29/02, B23P 15/28, B23Q 11/00**

(30) Priorität: 06.04.89 AT 803/89

(43) Veröffentlichungstag der Anmeldung:
10.10.90 Patentblatt 90/41

(84) Benannte Vertragsstaaten:
DE ES FR GB IT SE

(71) Anmelder: BÖHLER Gesellschaft m.b.H.
Nordwestbahnstrasse 12-14
A-1201 Wien(AT)

(72) Erfinder: Kroisenbrunner, Walter
Burgstallweg 30
A-8605 Kapfenberg(AT)

(54) Maschinenbauteil, insbesondere Werkzeughalter, mit hoher Stabilität gegen Schwingung und Verfahren zu dessen Herstellung.

(57) Maschinenbauteil mit hoher Stabilität gegen Schwingung, insbesondere Auskragen der Werkzeughalter, welcher über zumindest einem Teil seiner Längserstreckung mindestens zwei unterschiedliche Materialien bzw. Legierungen und /oder Zonen (2), (3) mit unterschiedlichen Gefügestrukturen und vorzugsweise mit konzentrischer Anordnung aufweist, zwischen welchen metallische Verbindung (8) besteht, wobei die unterschiedlichen Materialien bzw. Legierungen und/oder Zonen (2), (3) verschiedene mechanische Spannungszustände aufweisen.

EP 0 391 881 A2

## Maschinenbauteil, insbesondere Werkzeughalter, mit hoher Stabilität gegen Schwingung und Verfahren zu dessen Herstellung

Die Erfindung betrifft einen Maschinenbauteil mit hoher Stabilität gegen Schwingung , insbesondere Werkzeughalter, der auskragend mit einer Länge, die mindestens dem Vierfachen des Durchmessers entspricht, einseitig eingespannt und auf Biegung und/oder Torsion und/oder Zug bzw. Druck beansprucht ist, sowie ein Verfahren zu dessen Herstellung.

Maschinenbauteile, die einseitig eingespannt sind, mit einer Länge von mehr als dem vierfachen Durchmesser auskragen, und am distalen Ende gegebenenfalls unstetig, insbesondere teilweise durch Reibung, belastet werden, wie dies beispielsweise bei Teilen in Preßluftanlagen oder bei einem Werkzeughalter, wie Bohr-oder Ausdrehstange und dgl., gegeben ist, können zu Schwingungen angeregt werden, die zerstörend wirken, störende Geräusche bewirken oder zumindest die Funktion der Teile nachteilig beeinflussen. Dabei treten im Teil Logitudinalschwingungen und/oder Biegeschwingungen und/oder Drehschwingungen mit einer Frequenz auf, die proportional der Wurzel aus dem Wert, gebildet aus Richtmoment gebrochen durch Trägheitsmoment der schwingenden Masse ist. Beispielsweise können durch Schwingung eines Werkzeughalters bzw. eines Werkzeuges bei einer spanabhebenden Bearbeitung ungenaue und rauhe Oberflächen des Werkstückes und höhere Werkzeugbelastungen bewirkt und Geräuschbelästigungen verursacht werden. Aus obigen Gründen sind die Auskragungen derartiger Gegenstände begrenzt und es werden z.B. bei einseitig eingebauten Maschinenteilen in Preßgasgeräten die Massen am distalen Ende der Teile vergrößert. Bei Werkzeughalterungen werden diese nach Möglichkeit mit einem großen Durchmesser ausgeführt sowie bei der Bearbeitung die Spanabnahme und/oder die Bearbeitungsgeschwindigkeit klein gehalten. Diese Maßnahmen bewirken jedoch bautechnische und wirtschaftliche Nachteile.

Es wurde schon vorgeschlagen, die Stabilität gegen Schwingung dadurch zu erhöhen, daß die Maschinenteile bzw. Werkzeughalterungen hohl ausgeführt und mit einem spezifisch schwereren Material, insbesondere Pulver, gefüllt werden. Gemäß einem anderen Vorschlag soll eine Stabilität gegen Schwingung vergrößert werden, so daß der beanspruchte Teil zumindest in einem Bereich hohl ausgeführt ist und sich im Hohl ein Dämpferkörper federnd gelagert befindet, wobei der Raum zwischen dem Dämpferkörper und der Innenoberfläche des Hohles mit einer Flüssigkeit, beispielsweise Öl , gefüllt ist. Dieses passiv wirkende System soll die Schwingungsenergie von den Vibrationen im Werkzeug aufnehmen, wobei die Trägheitskraft des Dämpferkörpers zusammen mit der Viskosität des Öles wirksam ist. Alle bisherigen Vorschläge und Ausführungen , mit welchen die Schwingungsneigung von Teilen vermindert werden soll, haben den Nachteil gemeinsam, daß sie wenig wirksam und/oder aufwendig sind.

Der Erfindung lag die Aufgabe zugrunde, obige Nachteile zu vermeiden und Maschinenteile zu schaffen, welche hohe Stabilität gegen Schwingung besitzen und mit einer Auskraglänge von mehr als dem Vierfachen des Teildurchmessers einsetzbar sind.

Diese Aufgabe wird erfindungsgemäß dadurch gelöst, daß der Teil über zumindest einem Teil seiner Längserstreckung mindestens zwei unterschiedliche Materialien bzw. Legierungen und/oder Zonen mit unterschiedlicher Gefügestruktur aufweist, welche quer zur Längsachse, insbesondere weitgehend konzentrisch, angeordnet sind und zwischen welchen gegebenenfalls metallische Verbindung besteht, wobei die unterschiedlichen Materialien bzw. Legierungen und/oder Zonen verschiedene, insbesondere entgegengerichtete, im elastischen Bereich des Werkstoffes bzw. der Werkstoffe liegende mechanische Spannungszustände bzw. mechanische Spannungen aufweisen. Dabei ist es vorteilhaft, wenn im Bereich der Außenoberfläche des Teiles Spannungen von mindestens 250 N/mm², vorzugsweise mindestens 300 N/mm²‰, insbesondere mindestens 330 N/mm², höchstens jedoch 90 der 0,02% Verformungsgrenze des Materials herrschen. Eine besonders vorteilhafte Ausführung wird erreicht, wenn der Maschinenbauteil aus mindestens zwei Teilen gebildet ist, welche aus unterschiedlichem Werkstoff oder unterschiedlicher Legierung bestehen, die miteinander metallisch verbunden sind, wobei der Werkstoff bzw. die Legierung , die einen außenoberflächennahen Teil bildet, in bestimmten Temperaturbereichen eine Phasenumwandlung erfährt und sich in einem vergüteten Zustand befindet, und der Werkstoff bzw. die Legierung, die den kernnäheren Teil bildet, derart zusammengesetzt ist, daß diese gegebenenfalls eine Phasenumwandlung, vorzugsweise bei höherer Temperatur als der darüberliegende Teil, aufweist. Erfindungsgemäß kann der Teil auch aus einem Werkstoff , insbesondere aus härtbarem Stahl bestehen und zwei Zonen aufweisen, wobei in der oberflächennahen Zone ein Härte- bzw. Vergütungsgefüge gebildet ist. Besondere Stabilität gegen Schwingung besitzt der Maschinenbauteil, wenn die Querschnittsfläche des außenoberflächennahen Teiles bzw. der Zone mindestens 0,2, vorzugsweise mindestens 0,4 , mal die Gesamtquerschnittsfläche beträgt.

Das erfindungsgemäße Verfahren besteht im wesentlichen darin, daß ein gegebenenfalls aus mehreren Teilen mit unterschiedlichen Werkstoffen und/oder Legierungen gebildeter Maschinenbauteil, insbesondere Werkzeughalter, gegebenenfalls mit einem temperaturausgleichenden Halten bei einer Temperatur unterhalb der Umwandlungs temperatur von Alpha- in Gammagefüge zumindest in einer außenoberflächennahen Zone über die Umwandlungstemperatur erwärmt bzw. austenitisiert und anschließend, vorzugsweise mit erhöhter Wärmeabfuhr von der Oberfläche, beispielsweise durch Eintauchen in Öl oder Wasser, zur Bildung eines Härtegefüges abgekühlt und vorzugsweise angelassen wird. Bei einem Maschinenbauteil, der aus einem Werkstoff , insbesondere härtbarem Stahl, besteht, wird entsprechend dem erfindungsgemäßen Verfahren der Teil auf eine Temperatur von höchstens 200°C, vorzugsweise höchstens 100°C, insbesondere höchstens 40°C, mindestens jedoch 5°C, unterhalb der Austenitisierungstemperatur des Werkstoffes erwärmt und bei dieser bis zum weitgehenden Temperaturausgleich zwischen Kern und Oberfläche gehalten, wonach durch intensive Energiezufuhr eine Temperaturverteilung derart eingestellt wird, daß eine außenoberflächennahe Zone mit einem Querschnitt von mindestens 0,2, vorzugsweise minestens 0,4, höchstens jedoch 0,65, mal die Gesamtquerschnittsfläche, auf eine Temperatur über der Umwandlungstemperatur gebracht bzw. über den $A_{C1b}$-Punkt der Legierung austenitisiert ist und unmittelbar anschließend durch Wärmeentzug von der Oberfläche, vorzugsweise mit hoher Intensität, abgekühlt wird.

Es wurde gefunden, daß eine erhöhte Stabilität gegen Schwingung eines Maschinenbauteiles bzw. einer Werkzeughalterung durch einen inneren Spannungszustand im Teil erreicht werden kann, obwohl dem Fachmann bekannt ist,daß im elastischen Bereich der Werkstoffe bei gleich großer Belastung das Ausmaß der Verformung unabhängig von der Vorspannung ist. Bei Überwindung der Vorurteile der Fachwelt haben die Entwicklungen gezeigt, daß bei Vorliegen von mindestens zwei Zonen bzw. zwei Werkstoffen oder Legierungen in einem Teil, die vorzugsweise miteinander metallisch verbunden sind und unterschiedliche Spannungszustände aufweisen, eine Schwingungsdämpfung bzw. Stabilität gegen Schwingung erreicht wird. Als besonders günstig hat sich erwiesen, wenn der Bauteil zumindest im Bereich der Außenoberfläche aus einer Legierung bzw. einem Stahl gebildet ist, der mindestens 10 Gew.-% Chrom aufweist.

Anhand von Beispielen soll der erfindungsgemäße Gegenstand und das erfindugnsgemäße Verfahren zur Herstellung des Gegenstandes näher erläutert werden.

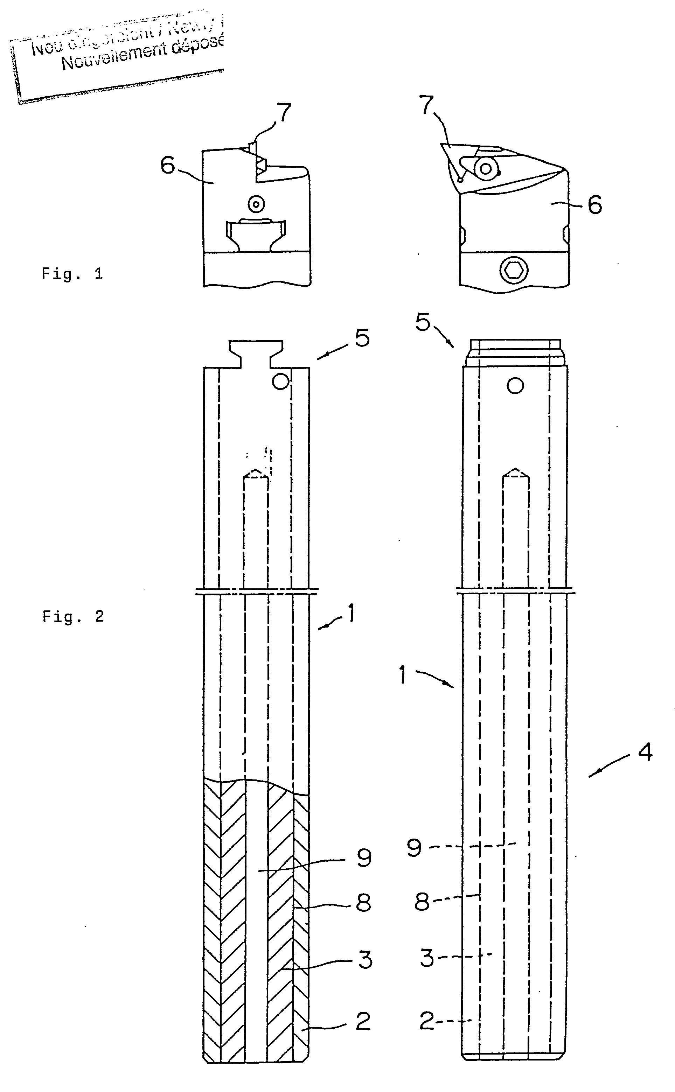

Fig. 1 zeigt einen Werkzeugkopf (6) mit Schneidplättchen (7).

Fig. 2 zeigt eine erfindungsgemäße Ausdrehstange (1), bestehend aus einem außenoberflächennahen Teil (2) und einem kernnahen Teil (3), der eine Bohrung (8) aufweisen kann ( strichliert dargestellt), dem proximalen Einspannende (4) und dem distalen Ende (5), welches zur Aufnahme des Werkzeugkopfes (6) ausgebildet ist. Der außenoberflächennahe Teil (2) besteht aus einem Werkstoff DIN Nr.1.2379, ist auf eine Härte von 63 HRC vergütet und weist eine Zugspannung von 340 $Nmm^2$ auf; der kernnahe Teil besteht aus einem Werkstoff DIN Nr. 1.7131 und hat eine Querschnittsfläche, die 54 % der Gesamtquerschnittsfläche der Ausdrehstange entspricht. Mit dieser Ausdrehstange wurden, bei einer Auskragung von der Einspannung bis zum Schneidplättchen von 9 mal dem Stangendurchmesser, an Werkstücken Innenausdrehungen vorgenommen, wobei die vierfache Leistung bei erhöhter Genauigkeit ohne Lärmentwicklung erzielbar war.

Eine Ausdrehstange aus dem Werkstoff DIN Nr. 1.4120 mit einem Außendurchmesser von 100 mm rund und einer Länge von 1450 mm wurde nach dem erfindungsgemäßen Verfahren wärmebehandelt. Dabei erfolgte eine Anwärmung auf eine Temperatur von 720°C und ein Halten bei dieser Temperatur von 150 Minuten. Nach dem weitgehenden Temperaturausgleich wurde der Außenoberfläche der Stange mittels Hochleistungsbrennern Wärmeenergie zugeführt, wobei die Temperatur bis zu einer Tiefe von 30 mm unter der Oberfläche auf Werte über 883 C, dem $A_{C1e}$-Punkt des Austenitisierungstemperaturbereiches des Werkstoffes, stieg. Unmittelbar danach wurde die Stange in bewegtem Wasser abgekühlt und die gehärtete Zone auf eine Festigkeit von 1010 N/mm² angelassen. Nach der spanabhebenden Bearbeitung und Einsetzen des Werkzeugkopfes wurden Ausdreharbeiten durchgeführt, wobei die Auskraglänge der Ausdrehstange 950 mm betrug. Im Vergleich mit einer konventionell hergestellten Ausdrehstange konnte mit dem erfindungsgemäßen Werkzeughalter eine mindestens 3,6-fache Leistung bzw. Spanabnahme je Zeiteinheit erfolgen, ohne daß störende, auf eine Schwingung der Ausdrehstange zurückzuführende Geräusche entstanden. Mittels des Kernringverfahrens wurde in der oberflächennahen Zone des erfindungsgemäßen Werkzeughalters eine Spannung von 285 N/mm² gemessen.

## Ansprüche

1. Maschinenbauteil mit hoher Stabilität gegen Schwingung, insbesondere Werkzeughalter, der auskragend mit einer Länge, die mindestens dem Vierfachen des Durchmessers entspricht, einseitig eingespannt und auf Biegung und/oder Zug bzw. Druck beansprucht ist, dadurch gekennzeichnet, daß der Teil (1) über zumindest einem Teil seiner Längserstreckung mindestens zwei unterschiedliche Materialien bzw. Legierungen und/oder Zonen (2), (3) mit unterschiedlichen Gefügestrukturen aufweist, welche quer zur Längsachse, insbesondere weitgehend konzentrisch angeordnet sind, und zwischen welchen gegebenenfalls metallische Verbindung (8) besteht, wobei die unterschiedlichen Materialien bzw. Legierungen und/oder Zonen (2), (3) verschiedene, inbesondere entgegengesetzt gerichtete, im elastischen Bereich des Werkstoffes bzw. der Werkstoffe liegende, mechanische Spannungszustände bzw. mechanische Spannungen aufweisen.

2. Maschinenbauteil nach Anspruch 1, dadurch gekennzeichnet, daß im Bereich der Außenoberfläche des Teiles (2) Spannungen von mindestens 250 N/mm², vorzugsweise mindestens 300 N/mm², insbesondere 330 N/mm², höchstens jedoch von 90% der 0,02 Verformungsgrenze des Materials, herrschen.

3. Maschinenbauteil nach den Ansprüchen 1 und 2, dadurch gekennzeichnet, daß dieser aus mindestens zwei Teilen (2), (3) gebildet ist, welche aus unterschiedlichem Werkstoff oder unterschiedlicher Legierung bestehen, die miteinander metallisch verbunden sind (8), wobei der Werkstoff bzw. die Legierung , die einen außenoberflächennahen Teil bildet, in einem bestimmten Temperaturbereich eine Phasenumwandlung erfährt und sich in einem vergüteten Zustand befindet, und der Werkstoff bzw. die Legierung, die einen kernnäheren Teil bildet, derart zusammengesetzt ist, daß diese gegebenenfalls eine Phasenumwandlung, vorzugsweise bei höheren Temperaturen als der darüberliegende Teil, aufweist.

4. Maschinenbauteil nach Anspruch 3, dadurch gekennzeichnet, daß der außenoberflächennahe Teil (2) aus härtbarem Stahl besteht und auf eine Härte von mindestens 54 HRC, vorzugsweise auf mindestens 56 HRC , insbesondere mindestens 60 HRC, vergütet ist.

5. Maschinenbauteil nach Anspruch 1, dadurch gekennzeichnet, daß dieser aus einem Werkstoff, insbesondere aus härtbarem Stahl, bestehende Teil zwei Zonen aufweist, wobei in der oberflächennahen Zone ein Härte- bzw. Vergütungsgefüge gebildet ist.

6. Maschinenbauteil nach den Ansprüchen 1 bis 5, dadurch gekennzeichnet, daß die Querschnittsfläche des außenoberflächennahen Teiles bzw. der Zone mindestens 0,2, vorzugsweise mindestens 0,4, mal die Gesamtquerschnittsfläche beträgt.

7. Maschinenbauteil nach den Ansprüchen 1 bis 6, dadurch gekennzeichnet, daß zumindest der außenoberflächennahe Teil (2) aus einer Legierung bzw. einem Stahl gebildet ist, der mindestens 10 Gew.-%, vorzugsweise mindestens 12 Gew.-% Chrom enthält.

8. Verfahren zur Herstellung eines Maschinenbauteiles mit hoher Stabilität gegen Schwingung, insbesondere Werkzeughalter, dadurch gekennzeichnet, daß ein gegebenenfalls aus mehreren Teilen mit unterschiedlichen Werkstoffen und/oder Legierungen gebildeter Teil (1), gegebenenfalls mit einem temperaturausgleichenden Halten bei einer Temperatur unterhalb der Umwandlungstemperatur von Alpha- in Gammagefüge des Werkstoffes, zumindest in einer außenoberflächennahen Zone (2) über die Umwandlungstemperatur erwärmt bzw. austenitisiert und anschließend vorzugsweise mit erhöhter Wärmeabfuhr von der Oberfläche, beispielsweise durch Eintauchen in Öl oder Wasser, zur Bildung eines Härtegefüges abgekühlt und vorzugsweise danach angelassen wird.

9. Verfahren nach Anspruch 7, dadurch gekennzeichnet, daß der außenoberflächennahe Bereich (2) des Teiles (1) auf eine Härte von mindestens 45 HRC, vorzugsweise mindestens 56 HRC, insbesondere mindestens 60 HRC, durch Härten und Anlassen vergütet wird.

10. Verfahren nach den Ansprüchen 8 und 9, dadurch gekennzeichnet, daß der aus einem Werkstoff, insbesondere härtbarem Stahl, bestehende Teil auf eine Temperatur von höchstens 200° C, vorzugsweise höchstens 100° C, insbesondere höchstens 40° C, mindestens jedoch 2° C, unterhalb einer Temperatur, bei welcher die Austenitbildung des Werkstoffes beginnt, erwärmt und bei dieser Temperatur zum weitgehenden Temperaturausgleich zwischen Kern und Oberfläche gehalten wird, wonach durch intensive Energiezufuhr eine Temperaturverteilung derart eingestellt wird, daß eine außenoberflächennahe Zone mit einem Querschnitt von mindestens 0,2, vorzugsweise mindestens 0,4, höchstens jedoch 0,65, mal die Gesamtquerschnittsfläche, auf eine Temperatur über der Umwandlungstemperatur gebracht bzw. über den $A_{c1b}$-Punkt der Legierung austenitisiert ist und unmittelbar anschließend durch Wärmeentzug von der Oberfläche, vorzugsweise verstärkt, abgekühlt wird.

Fig. 1

Fig. 2